# EUROPEAN PATENT APPLICATION

(11) **EP 4 575 266 A1**
(43) Date of publication of application: **25.06.2025**
(21) Application number: 23307311.3
(22) Date of filing: 21.12.2023
(51) Int. Cl.: F16H 25/20

(54) **SYSTEM FOR AN ACTUATOR**

(71) Applicant: Goodrich Actuation Systems SAS, 27950 Saint-Marcel (FR)
(72) Inventor: CHAUSSIVERT, Axel, 95310 Saint Ouen L'Aumone (FR); MEDINA, Raphael, 95310 Saint Ouen L'Aumone (FR)
(74) Representative: Dehns

(57) **Abstract**

There is provided a system for identifying a failure of the primary load path in an actuator (200). The actuator (200) comprises a screw shaft (210) and a nut assembly (400) moveable along the screw shaft (210). The nut assembly (400) comprises a primary nut (420) for transmitting load through the actuator (200) along a primary load path, and a secondary nut (440) for transmitting load through the actuator (200) along a secondary load path. The nut assembly (400) is configured such that, in normal operation, the secondary nut (440) is not engaged with the screw shaft (210) and load is transmitted through the actuator (200) along the primary load path, and such that, upon failure of the primary load path, the secondary nut (440) is configured to engage the screw shaft (210) and transmit load through the actuator (200) along the secondary load path. The system comprises a strain gauge (480) configured to be mounted to the actuator (200) and to measure vibrations of the actuator (200), and a processor (608) configured to identify a failure of the primary load path from the measured vibrations. The strain gauge is a piezoelectric strain gauge. There is also provided a method for identifying a failure of the primary load path in an actuator (200).

## Description

### TECHNICAL FIELD

The present disclosure relates to a system for identifying a failure of the primary load path in an actuator and to an actuator including such a system, for example a trimmable horizontal stabiliser actuator ("THSA") for an aircraft, wherein the actuator includes a primary load path and a secondary load path that is configured to carry the load of the actuator upon failure of the primary load path.

### BACKGROUND

Actuators typically provide a structural link between stationary parts of the actuator (and the object to which the actuator is attached), which provide a driving force for the actuator, and the moving parts of the actuator that actuate a component. Various loads are transmitted from the component to the stationary parts of the actuator via the moving parts thereof. Most actuators provide this structural link in the form of a load path, along which various tolerances are provided between components to account for excessive loading in use.

An example of such an actuator is a trimmable horizontal stabiliser actuator ("THSA") for an aircraft, which is submitted to various aerodynamic loads in use (e.g., flutter caused by turbulence). In some cases, such actuators comprise a primary load path that is configured to support aerodynamic loads in normal condition, and a secondary load path that is configured to support aerodynamic loads upon failure of the primary load path. During normal use, the secondary load path is intended to remain in an unloaded condition.

It is desired to provide means for detecting and / or identifying the failure of the primary load path, and the subsequent loading of the secondary load path.

### SUMMARY

According to a first aspect of the disclosure, there is provided a system for identifying a failure of the primary load path in an actuator. The actuator comprises a screw shaft and a nut assembly moveable along the screw shaft. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The system comprises a strain gauge configured to be mounted to the actuator and to measure vibrations of the actuator, and a processor configured to identify a failure of the primary load path from the measured vibrations. The strain gauge is a piezoelectric strain gauge.

In any example of the disclosure, the strain gauge may be mounted on a support member configured to be mounted to the actuator.

In any example of the disclosure, the strain gauge and the processor may be connected with a wired connection. In any example of the disclosure, the strain gauge and the processor may be connected wirelessly.

According to another aspect of the disclosure, there is provided an actuator. The actuator comprises a screw shaft and a nut assembly moveable along the screw shaft. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The actuator comprises a system of any of the above examples. The strain gauge or the support member is mounted to the actuator.

In any example of the disclosure, the strain gauge or the support member may be mounted on the nut assembly.

In any example of the disclosure, the secondary nut may comprise a pair of trunnions.

In any example of the disclosure, the nut assembly may comprise a pair of junction plates.

In any example of the disclosure, each of the junction plates may comprise an opening for receiving a respective trunnion of the pair of trunnions.

In any example of the disclosure, in normal operation, the trunnions may not contact respective openings in the junction plate.

According to another aspect of the disclosure, there is provided a system for identifying a failure of the primary load path in an actuator. The actuator comprises a screw shaft and a nut assembly moveable along the screw shaft. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The system comprises a support member configured to be mounted to the nut assembly, wherein, upon failure of the primary load path, the support member is configured to be impacted by the secondary nut and to vibrate due to the impact. The system comprises a strain gauge mounted to the support member and configured to measure vibrations of the support member, and a processor configured to identify a failure of the primary load path from the measured vibrations.

In any example of the disclosure, the support member may comprise an impact portion configured such that, upon failure of the primary load path, the impact portion is impacted by a component of the secondary nut before or simultaneously with the loading of the secondary load path.

In any example of the disclosure, the strain gauge may be mounted on the impact portion.

In any example of the disclosure, the strain gauge may be one of a piezoelectric strain gauge, a piezoresistive strain gauge, a capacitive strain gauge or a metal foil strain gauge.

In any example of the disclosure, the processor may be mounted on the support member.

In any example of the disclosure, the impact portion may be a protrusion.

In any example of the disclosure, the strain gauge may be attached and /or mounted directly to the support member.

In any example of the disclosure, the strain gauge may be attached anywhere on the support member.

In any example of the disclosure, the strain gauge may be attached on the support member on a surface facing away from the nut assembly.

According to another aspect of the disclosure, there is provided an actuator. The actuator comprises a screw shaft and a nut assembly moveable along the screw shaft. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The actuator comprises the system of any of the above examples, wherein the support member is mounted to the nut assembly.

In any example of the disclosure, the nut assembly may comprise a junction plate configured to form a portion of the primary load path in normal operation, and further configured to form a portion of the secondary load path upon failure of the primary load path.

In any example of the disclosure, the strain gauge or the support member may be mounted on the junction plate.

In any example of the disclosure, the secondary nut may comprise an outwardly extending member, and the support member may be configured to be impacted by the outwardly extending member.

In some examples, the outwardly extending member is a pin.

In some examples, the secondary nut comprises a pair of trunnions, and the outwardly extending member is one of the trunnions.

In some examples, the outwardly extending member extends through an opening in the junction plate.

In any example of the disclosure, the processor may be configured to compare the measured vibrations to a predetermined threshold value to identify the failure of the primary load path.

In any example of the disclosure, the system may comprise a housing configured to protect the strain gauge.

In any example of the disclosure, the actuator may be a linear actuator.

In any example of the disclosure, the actuator may be an electromechanical linear actuator.

In any example of the disclosure, the actuator may be a trimmable horizontal stabiliser actuator.

In any example of the disclosure, the actuator may comprise a static portion configured to be attached to a fixed structure, and the nut assembly may be moveable relative to the static portion.

According to another aspect of the disclosure, there is provided an aircraft comprising a system or an actuator of any of the above examples.

According to another aspect of the disclosure, there is provided a method for identifying a failure of the primary load path in an actuator. The actuator comprises a screw shaft and a nut assembly moveable along the screw shaft. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The method comprises measuring vibrations of the actuator by a piezoelectric strain gauge mounted to the actuator, and processing the measured vibrations to identify a failure of the primary load path.

According to another aspect of the disclosure, there is provided a method for identifying a failure of the primary load path in an actuator. The actuator comprises a screw shaft and a nut assembly moveable along the screw shaft. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The method comprises: mounting a support member to the nut assembly, wherein, upon failure of the primary load path, the support member is configured to be impacted by the secondary nut and to vibrate due to the impact; measuring vibrations of the support member by a strain gauge mounted to the support member, and processing the measured vibrations to identify a failure of the primary load path.

In any example of the disclosure, the processing the measured vibrations may comprise comparing the measured vibrations to a pre-determined threshold value, and identifying a failure of the primary load path when the measured vibrations exceed the predetermined threshold value.

In any example of the disclosure, the method may comprise notifying a user and / or activating an alarm if primary load path failure is determined.

According to another aspect of the disclosure, there is provided a method for modifying an actuator. The actuator comprises a screw shaft and a nut assembly moveable along the screw shaft. The nut assembly comprises a primary nut for transmitting load through the actuator along a primary load path, and a secondary nut for transmitting load through the actuator along a secondary load path. The nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path. The method comprises installing a system of any of the above examples on the actuator.

In some examples, the actuator comprises a fastener, and the step of installing the system of any of the above examples on the actuator comprises removing the fastener, positioning the system on the actuator, and replacing the fastener so as to secure the system to the actuator.

### BRIEF DESCRIPTION OF THE DRAWINGS

Various examples will now be described, by way of example only, and with reference to the accompanying drawings in which:
Fig. 1 shows a schematic perspective view of the tail end of an aircraft;
Fig. 2 shows a schematic view of an example actuator for use with a system according to an example of the disclosure;
Fig. 3 shows one example of a primary and secondary load path of the actuator of Fig 2;
Figs. 4a and 4b show examples of the primary and secondary load paths in an example actuator for use with a system according to the disclosure, in which the primary load path is shown in Fig 4a, while the secondary load path is shown in Fig 4b;
Fig. 5 shows a schematic perspective view of a nut assembly of the actuator of Figs. 4a and 4b and including a portion of the screw shaft for reference;
Fig. 6 shows a schematic cross-sectional view of the nut assembly of Fig. 5 and including a portion of the screw shaft for reference;
Figs. 7a, 7b, and 7c show schematic perspective views of the nut assembly of Fig. 5 with respective strain gauges attached thereto;
Fig. 8 shows a schematic side view of a system according to an example of the disclosure;
Fig. 9 shows example strain gauge signal data;
Fig. 10a shows a schematic perspective view of the nut assembly of Fig. 5 with a strain gauge attached thereto;
Fig.10b shows example strain gauge signal data for the example shown in Fig. 10a;
Figs. 11a and 11b show a schematic perspective view of the static portion of the actuator shown in Figs 4a and 4b with a strain gauge attached thereto;
Fig. 12 shows a schematic perspective view of the nut assembly of Fig. 5 with system according to an example of the disclosure attached thereto;
Fig. 13 shows a schematic perspective view of the nut assembly of Fig. 5 with a system according to a second example of the disclosure attached thereto; and
Fig.14 shows example strain gauge signal data for the example shown in Fig. 13.

### DETAILED DESCRIPTION

The present disclosure relates to actuators, such as for example a flight control actuator, such as a trimmable horizontal stabiliser actuator ("THSA") for an aircraft. In any example of the disclosure, the actuator includes a primary load path and a secondary load path that is configured to carry the load of the actuator upon failure of the primary load path. In any example of the disclosure, the actuator includes a strain gauge and is configured to identify failure of the primary load path based on vibrations recorded by the strain gauge.

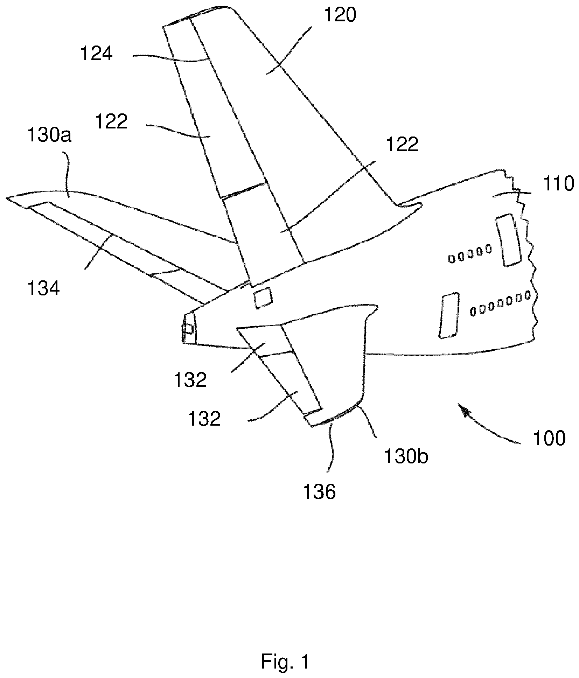

Fig. 1 shows a schematic perspective view of the tail end 100 of an aircraft (not shown). The aircraft includes a vertical stabiliser 120 extending upwardly from the aircraft fuselage 110 and respective horizontal stabilisers 130a, 130b extending outwardly from the aircraft fuselage 110 on respective sides of the aircraft. One or more rudders 122 are provided at the trailing edge 124 (i.e. the rear face) of the vertical stabiliser 120 and one or more elevators 132 are provided on the trailing edge 134 (i.e. the rear face) of each horizontal stabiliser 130a, 130b. The vertical stabilisers 120, horizontal stabilisers 130a, 130b, rudders 122 and elevators 132 are adapted to be moved by actuation systems (not shown) to control movement of the aircraft.

The actuation system typically includes a control system (not shown) and a number of actuators (not shown in Fig. 1) configured to move the respective vertical stabilisers 120, horizontal stabilisers 130a, 130b, rudders 122 and elevators 132 under the control of the control system.

The actuators may take a number of different forms depending for example on the type and size of aircraft in which they are used. In one example, one or more electromechanical actuators, more specifically electromechanical linear actuators may be provided in the actuation system. An example of an electromechanical linear actuator which may be used to move one of the horizontal stabilisers 130a, 130b is a "trimmable horizontal stabiliser actuator" (often referred to as a THSA). The electromechanical linear actuator according to various examples of the disclosure may for example be a THSA for use with horizontal stabilisers as described above. It will be understood however that the present disclosure is relevant to other types of electromechanical linear actuators and is not limited to actuators for use in aircraft or to THSAs.

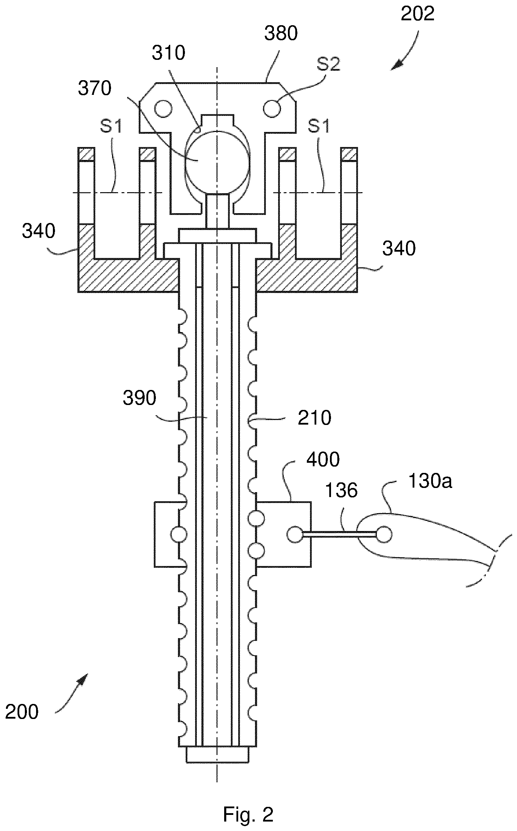

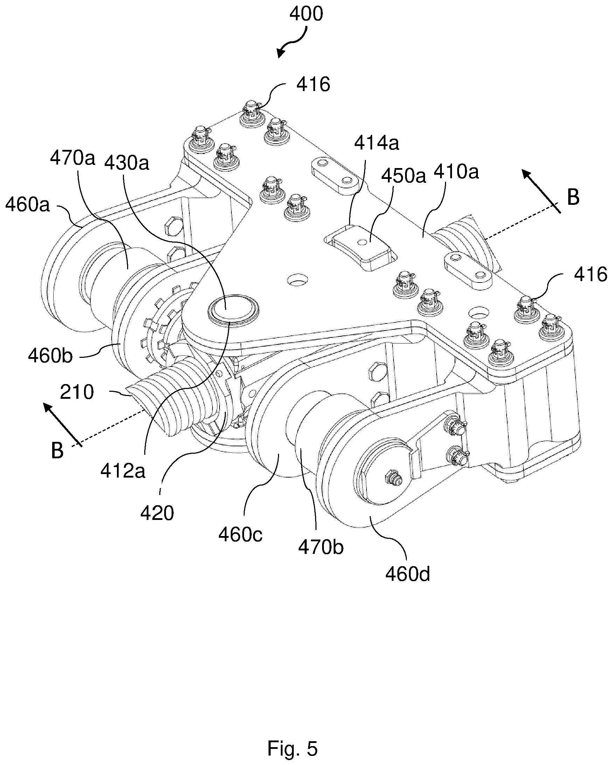

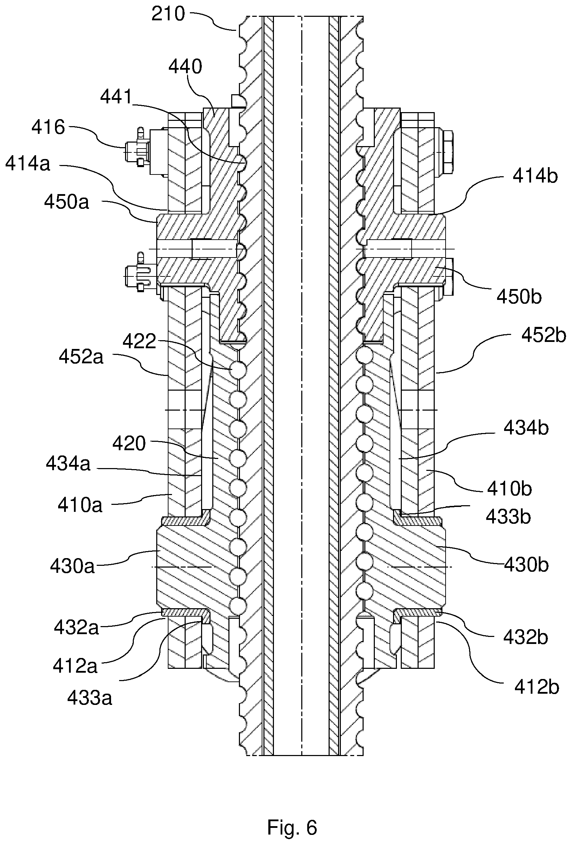

Fig. 2 shows an example actuator 200, which may be a flight control actuator, such as a trimmable horizontal stabiliser actuator ("THSA"), as described above. The actuator 200 may include a primary load path with a screw shaft 210 (e.g., that is hollow) connected at an end thereof, for example at its upper end as shown, to the aircraft via a static portion 202 including a first joint system 340 (e.g., a Carden joint system) joining with first aircraft structural elements S1. The primary load path further includes a nut assembly 400 mounted on the screw shaft 210, and the nut assembly 400 is connected to a moveable component, for example, a stabiliser 130a, 130b of the aircraft, this connection being achieved for example by a second joint system 136 (e.g., a further Carden joint system). Nut assembly 400 is described in more detail below with respect to Figs. 5 and 6.

The secondary load path may be provided by means of a tie bar 390 that is within the screw shaft 210. The tie bar 390 is terminated at a first end by a male portion, in this case optionally taking the form of a spherical head 370, which is mounted within a female portion on a fastening piece 380, optionally taking the form of a recess 310. The fastening piece 380 may be connected to the structure of the aircraft via second aircraft structural elements S2. The actuator may also include some means for preventing motion of the nut assembly 400 relative to the screw shaft 210 and/or for fixing the stabiliser 130a/second joint system 136 in place when the primary load path fails. Thus, the nut assembly 400, also includes secondary load path elements that are enabled for use upon failure of the primary load path.

It will be appreciated from Fig. 2 that movement of the spherical head 370 may be restricted by the upper and lower shoulders of the recess 310. Consequently, the stabiliser 130a can either be safely held in a single position (in the case where the nut assembly 400 locks in place) or in some arrangements it might be permitted to continue normal movement should the tie bar 390 be connected with the screw shaft 210 in such a way as to permit continued rotation of the screw shaft 210 even after failure preventing it from carrying axial loads.

During normal use, e.g., without any failure, the loading for the actuator 200 is carried via the primary load path. In the event of a failure of the primary load path the loading is transferred to the secondary load path.

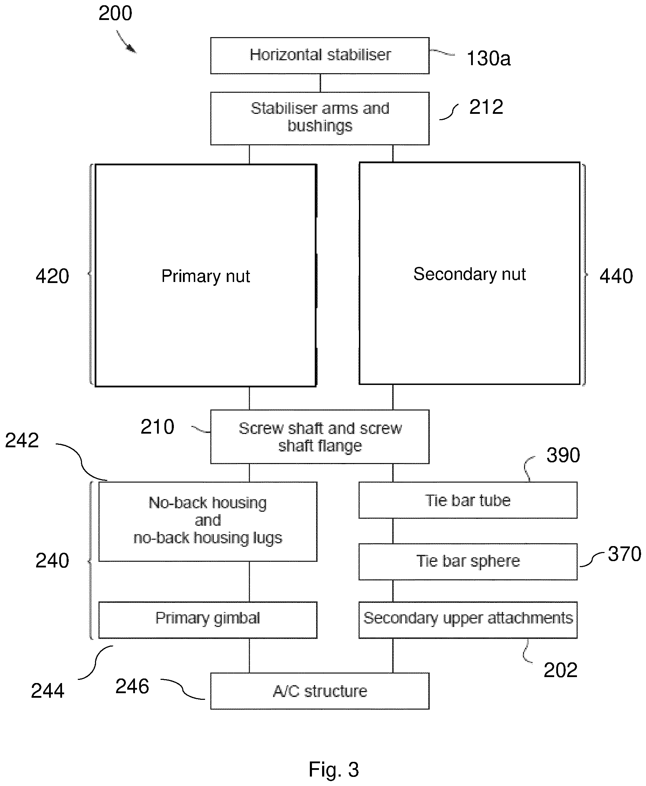

Fig. 3 shows one possible arrangement for the primary and secondary load paths of the actuator 200, in which a component (e.g., a horizontal stabiliser) 130a, 130b is connected by optional arms and bushings 212 to a primary nut 420 which connects it to the screw shaft 210.

As described in more detail below, the primary nut 420 may include primary trunnions 430a, 430b operatively connected to respective junction plates 41 0a, 410b (Fig. 6), and the primary nut 420 may comprise a ballscrew assembly (not shown).

The primary nut 420 forms part of the lower attachment 400 of the actuator 200 that is dedicated to the primary load path. At the upper end of the actuator 200 a joint system 240 (such as a Cardan joint system) will typically include no back elements 242 along with the primary load path gimbal 244, which may be coupled to the aircraft structure 246. During normal use, e.g., without any failure, the loading for the actuator 200 is carried via the primary load path.

In the event of a failure of the primary load path the loading is transferred to the secondary load path. In this case at the lower attachment 400 the horizontal stabiliser 130a is connected by the (optional) stabiliser arms and bushings 212 to a secondary nut 440.

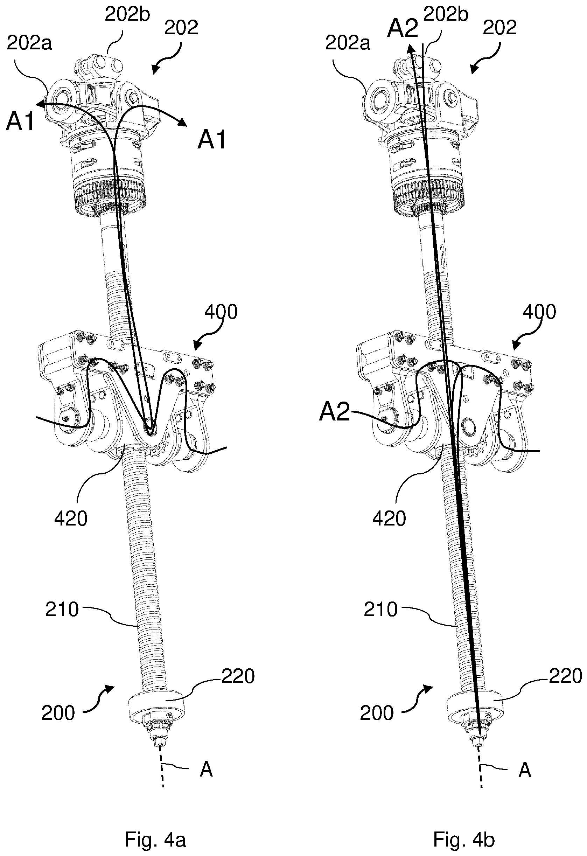

The secondary nut 440 typically comprises a screw thread that is arranged to lock with the threads of the screw shaft 210, preventing movement of the horizontal stabiliser 130a when the secondary load path is engaged. As described in more detail below (see Fig. 4), the secondary nut 440 may comprise secondary trunnions 450a, 450b which may be operatively connected to junction plates 410a, 410b. The secondary nut 440 may comprise screw threads (not shown) which can be joined to the thread of the screw shaft 210 when the secondary load path is engaged.

From the secondary nut 440 the load in the secondary load path may be transmitted via the screw shaft 210 along the tie bar rod 390 (Fig. 2) and optionally through the male end of the tie bar rod 390, which in this example is a tie bar sphere 370, and to an upper secondary attachment 202. Thus, the secondary nut 440 forms part of the lower attachment 400 of the actuator 200 that is dedicated to the secondary load path.

Examples of the primary and secondary load paths in an actuator according to the disclosure are shown in Figs. 4a and 4b. The primary load path is shown in Fig. 4a, which illustrates the actuator 200 operating under normal operation. While the secondary load path is shown in Fig. 4b, which illustrates the actuator 200 operating after failure of the primary load path.

Fig. 4a shows the actuator 200 comprising a static portion 202 that is configured to attach to a stationary object, for example an aircraft fuselage (not shown in Figs. 4a and 4b) as described above. The actuator 200 further comprises a motor (not shown) or other driving means configured to rotate the screw shaft 210 about an axis A.

The actuator 200 further comprises a nut assembly 400 as previously described that is configured to move axially along the screw shaft 210 upon rotation thereof. A component, for example a horizontal stabiliser 130a, may be operatively connected to the nut assembly 400, such that movement of the nut assembly 400 along the axis A causes actuation of the component by the actuator 200. A stop 220 located at one end of the screw shaft 210 is also shown in Figs. 4a and 4b. The stop 220 prevents the nut assembly 400 from detaching from the screw shaft 210.

The static component 202 may comprise a primary portion 202a and a secondary portion 202b, which may be connected to different parts of the stationary object or may be connected via different connections. The static component 202 may also be referred to as the upper attachment 202.

The nut assembly 400 comprises a primary nut 420 and a secondary nut 440, both of which may cooperate with the screw shaft 210 in order to drive the nut assembly 400 upon rotation thereof. This is described in more detail below.

During normal operation, as shown in Fig 4a, load is transferred from the component to which the actuator 200 is attached to the primary nut 420, and then to the primary portion 202a of the static component 202 via the screw shaft 210. This is referred to herein as a primary load path and is indicated by the arrows A1.

Upon failure of one or more components of the primary load path (e.g., rupturing of the primary nut 420 or one or more parts thereof) a secondary load path (indicated by the arrows A2 in Fig. 4b) is provided that is configured to transmit load between the static component 202 and the component to which the actuator 200 is attached.

Fig. 5 is a perspective view which shows the nut assembly 400 in more detail, and includes a portion of the screw shaft 210 for reference. Fig. 6 shows a cross-sectional side view of the nut assembly 400 of Fig. 5 taken along line B-B when the secondary load path is engaged as described further below.

As mentioned above, the nut assembly 400 comprises a primary nut 420. In the example shown, the primary nut 420 is mounted coaxially on the screw shaft 210. In some examples, the primary nut 420 is part of a suitable ballscrew assembly (or similar means) and cooperates with the screw shaft 210. In some examples, the ballscrew assembly comprises balls or ball bearings 422 arranged between the screw shaft 210 and the primary nut 420 so as to couple the screw shaft 210 and the primary nut 420 in the ballscrew assembly. In some examples, the primary nut 420 comprises a pair of primary trunnions 430a, 430b. In some examples, the primary nut 420 and primary trunnions 430a, 430b are shown as integrally formed. In other examples, the primary nut 420 and primary trunnions 430a, 430b may be formed separately and secured together. In any example, the primary trunnions 430a, 430b can extend outwardly from the primary nut 420 in opposite directions to each other and / or from opposite sides of the primary nut 420. In any example of the disclosure, the primary trunnions 430a, 430b can be coaxial with each other. In some examples, the primary trunnions 430a, 430b are shown as circular in cross-section. In other examples, the primary trunnions 430a, 430b may have any suitable cross-section, for example, square, rectangular or oval.

The nut assembly 400 comprises a secondary nut 440. In the example shown, the secondary nut 440 is mounted coaxially with the screw shaft 210. In some examples, the secondary nut 440 comprises a screw thread 441 for cooperating with the screw shaft 210. In the example shown, the secondary nut 440 comprises a pair of secondary trunnions 450a, 450b. In some examples, the secondary trunnions 450a, 450b are shown as circular in cross-section. In other examples, the secondary trunnions 450a, 450b may have any suitable cross-section, for example, square, rectangular or oval. The secondary nut 440 does not transmit load under normal operation (i.e. when the primary load path is loaded).

In the example shown, the nut assembly 400 comprises a pair of junction plates 410a, 410b. The junction plates 410a, 410b may be provided on opposite sides of the secondary nut 440. The junction plates 410a, 410b may extend parallel or within about 5° of parallel to each other. The junction plates 410a, 410b may extend parallel or within about 5° of parallel to the axis A. In some examples, the junction plates 410a, 410b are identical. In the example shown, apertures in the junction plates 410a, 410b define openings 412a, 412b for receiving one of the primary trunnions 430a, 430b, respectively. The nut assembly 400 may comprise bushings 432a, 432b which may be located on the respective primary trunnions 430a, 430b. The bushings 432a, 432b may be configured such that the primary trunnions 430a, 430b are snug within the openings 412a, 412b. As shown in Fig 6, one or more of the bushings 432a, 432b may comprise a flange 433a, 433b which abuts against a respective inner surface 434a, 434b of the junction plates 410a, 410b, so as to be retained in place.

In the example shown, apertures in the junction plates 410a, 410b may define openings 414a, 414b for receiving the respective secondary trunnions 450a, 450b. In the example shown, the openings 414a, 414b are shaped and sized such that, in normal operation, the secondary trunnions 450a, 450b are not in contact with the respective junction plates 410a, 410b. This is described in more detail below.

In the present example, the primary trunnions 430a, 430b and secondary trunnions 450a, 450b are configured to protrude outwardly, in some examples radially outwardly, so as to extend beyond the respective outer surfaces 452a, 452b of the junction plates 410a, 410b. In other examples, the primary trunnions 430a, 430b and/or the secondary trunnions 450a, 450b may extend up to the outer surfaces 452a, 452b of the junction plates 410a, 410b.

In the example shown, the nut assembly 400 comprises arm portions 460a, 460b, 460c, 460d that run axially along sides of the nut assembly 400 between the junction plates 410a, 410b. In the present example, the arm portions 460a, 460b, 460c, 460d are arranged as pairs. In this example, a first pair of arm portions 460a, 460b are arranged on an opposite side of the screw shaft 210 to a second pair of arm portions 460c, 460d. Each pair of arm portions is configured to support respective connectors 470a, 470b. Connectors 470a, 470b are configured to attach or operatively connect to a moveable component, such that axial movement of the primary nut 420 causes actuation of the moveable component. The arrangement comprising the junction plates 410a, 410b, the arm portions 460a, 460b, 460c, 460d, and the connectors 470a, 470b may be referred to as the connection assembly.

In the example shown, the primary nut 420, the secondary nut 440 and junction plates 410a, 410b are configured such that load is not transmitted to the secondary nut 440 during normal operation. In the example shown, this is achieved by providing a clearance around the secondary trunnions 450a, 450b such that the secondary trunnions 450a, 450b do not contact the inner edges defined by the openings 414a, 414b.

In the following, failure of the primary load path and subsequent loading of the secondary load path in one example of the disclosure is described. In the example shown, clearance provided between the secondary trunnions 450a, 450b and respective junction plates 410a, 410b allow the junction plates 410a, 410b, arm portions 460a, 460b, 460c, 460d and connectors 470a, 470b to move axially relative to the secondary nut 440 upon failure of the primary load path. The connection assembly will therefore continue to move axially relative to the secondary nut 440 until the inner surfaces of the openings 412a, 412b of junction plates 410a, 410b contact respective secondary trunnions 450a, 450b. The secondary trunnions 450a, 450b provide a resistive force against the connection assembly, thereby preventing further relative movement between the secondary nut 440 and the connection assembly. Consequently, the load is transmitted through the secondary nut 440 once the inner surfaces of the openings 412a, 412b of junction plates 410a, 410b contact respective secondary trunnions 450a, 450b. Put another way, upon failure of the primary load path, the junction plates 410a, 410b and the secondary trunnions 450a, 450b move into engagement with each other so as to form part of the secondary load path.

Due to the impact of the junction plates 410a, 410b with the secondary trunnions 450a, 450b, a shock (in other words, a vibration) is generated in the actuator when the primary load path fails. It will be understood that in many other examples of actuators having both a primary and secondary load path, a failure of the primary load path will cause mechanical engagement of one or more components of the secondary load path with other parts of the actuator, thus causing a shock similar to that described above. The inventors have realised that the shock can be detected by a system for identifying a failure of the primary load path in an actuator, the system including a strain gauge located on the actuator so as to identify that the secondary load path has become engaged and the primary load path has failed. In some examples, this strain gauge is a piezoelectric strain gauge. In other examples, the strain gauge can be a piezoresistive strain gauge, a capacitive strain gauge, a metal foil strain gauge or any other strain gauge configured to measure vibrations so that the system can detect this shock.

It is to be understood that, in any example of the disclosure, the system may be used with a linear actuator, an electromechanical linear actuator or a trimmable horizontal stabiliser actuator.

In the following described examples, a system for identifying a failure of the primary load path in an actuator is provided in which a piezoelectric strain gauge is used to detect the shock. In any of these examples, the piezoelectric strain gauge may be a piezoelectric omnidirectional strain sensor. One such piezoelectric omnidirectional strain sensor which may be used is a Dragonfly^{®} DGF-OMN-AA20206-10 Piezoelectric omnidirectional strain sensor manufactured by Wormsensing. The strain gauge may behave as a charge generator in parallel with a capacitor and a leakage resistor. The strain gauge may be passive and may not require any power supply. In some examples, the strain gauge can be operated either in charge mode (using a charge amplifier) or voltage mode (direct measurement). The strain gauge of some examples is made from a thin piezoelectric ceramic. A sensing element of the strain gauge typically has a thickness of less than 10 µm. The thickness may be between 1 µm and 20 µm, or between 5 µm and 15 µm. These thicknesses enable the sensing element to have the flexibility and stretchability of a 2D material. The crystalline nature of the sensing element of some examples results in high durability and repeatability.

For typical metal foil strain gauges, sensitivities are limited to about 1 to 10 µdef, where µdef is the unit of microstrain. Strain (ε) is the ratio of change in length to the original length, therefore, microstrain is ε × 10⁻⁶. By comparison, a strain gauge of the type described above may enable measurements in the region of about 0.01 µdef, having a sensitivity at least one hundred times greater than a typical metal foil strain gauge.

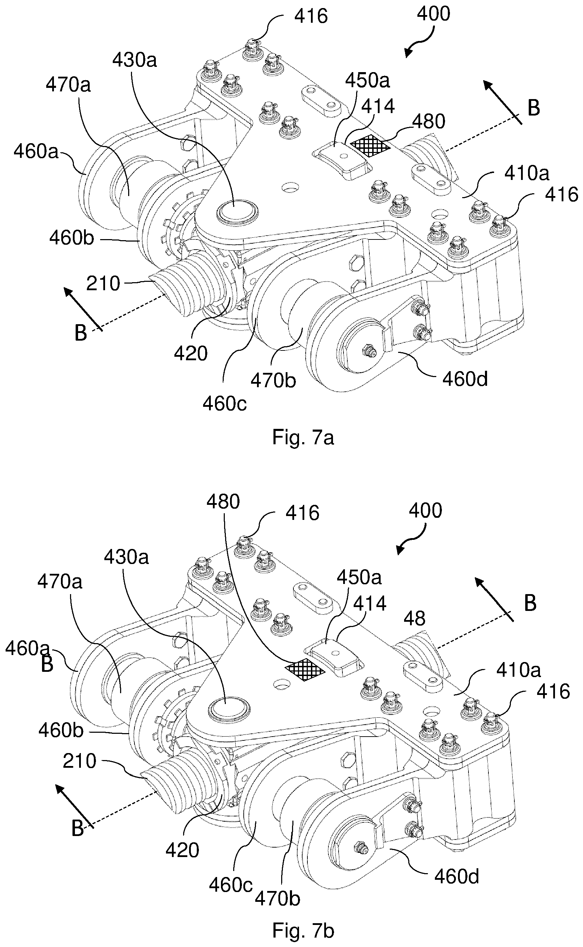

Figs. 7a-c each show the nut assembly 400 shown in Fig. 5 with a piezoelectric strain gauge 480 attached thereto. In the following examples, the piezoelectric strain gauge 480 may be retrofitted to an existing actuator 200 as shown. That is, the actuator 200 requires no disassembly or only minor disassembly in order to attach the strain gauge 480 to the nut assembly 400.

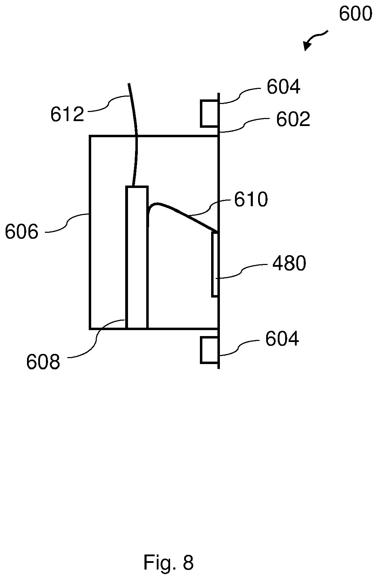

Fig. 8 shows a schematic side view of a system 600 for identifying a failure of the primary load path in an actuator, the system 600 including a piezoelectric strain gauge 480 such as that described above. As seen, the piezoelectric strain gauge 480 can be mounted on a plate 602 which in turn can be mounted to a part of the actuator 200, for example, the junction plate 410a. As described below, the plate 602 can be mounted to a part of the actuator 200 by a plurality of fixings 604 such as screws or rivets. A housing 606 may be provided, for example mounted on the plate 602 or integral therewith. The housing 606 may be configured to protect, for example to enclose, the piezoelectric strain gauge 480. The plate 602 and the housing 606 may be made of the same or different materials, including but not limited to metals. A wired connection 610 or a wireless connection may be provided between the piezoelectric strain gauge 480 and a processor or controller 608 which may be provided in the housing 606 as shown. A wired connection 612 or a wireless connection may be provided between the processor or controller 608 and the aircraft. In some examples, the processor may be provided externally of the housing, for example in an aircraft. Further, electronics for processing signals received from the piezoelectric strain gauge 480 may also be provided in the system 600 and within the housing 606.

In the example shown in Fig 7a, the piezoelectric strain gauge 480, or in some examples the system 600 including the piezoelectric strain gauge 480, is attached to an outer surface of a junction plate 410a. In the example shown, the piezoelectric strain gauge 480 may be located to be aligned with the secondary trunnion 450a in the axial direction. In other examples, the piezoelectric strain gauge 480 may be offset such that it is not aligned with the secondary trunnion 450a. In this example, the piezoelectric strain gauge 480 is positioned such that the secondary trunnion 450a is located axially between the piezoelectric strain gauge 480 and the primary trunnion 430a.

In the alternative example shown in Fig 7b, the piezoelectric strain gauge 480 is attached to an outer surface of junction plate 410a. In this example, the piezoelectric strain gauge 480, or in some examples the system 600 including the piezoelectric strain gauge 480, is located to be aligned with the secondary trunnion 450a in the axial direction. In other examples, the piezoelectric strain gauge 480 may be offset such that it is not aligned with the secondary trunnion 450a. In this example, the piezoelectric strain gauge 480 is positioned such that the piezoelectric strain gauge 480 is located axially between the secondary trunnion 450a and the primary trunnion 430a. In this example, the piezoelectric strain gauge 480 is located axially closer to the secondary trunnion 450a than to the primary trunnion 430a. In other examples, the piezoelectric strain gauge 480 may be located equidistant between the primary trunnion 430a and secondary trunnion 450a. In other examples, the piezoelectric strain gauge 480 may be located closer to the primary trunnion 430a than to the secondary trunnion 450a.

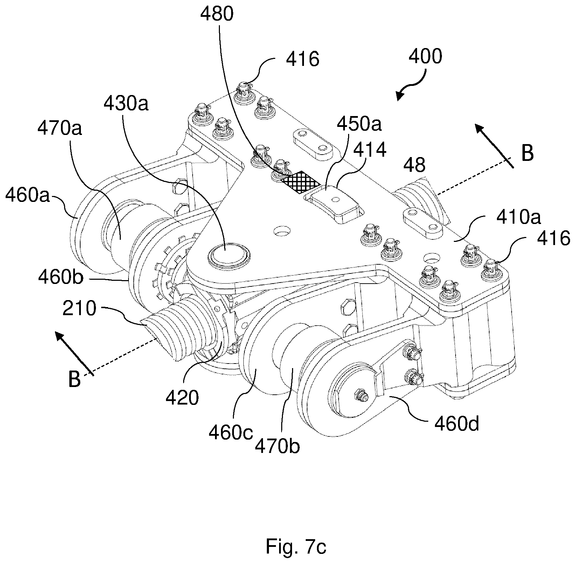

In the example shown in Fig 7c, the piezoelectric strain gauge 480, or in some examples the system 600 including the piezoelectric strain gauge 480, is attached to an outer surface of junction plate 410a. In particular, the piezoelectric strain gauge 480 is located to be axially offset from the secondary trunnion 450a. In other examples, the piezoelectric strain gauge 480 may be offset such that it is not aligned with the secondary trunnion 450a. In this example, the piezoelectric strain gauge 480 is positioned such that the secondary trunnion 450a is located axially between the piezoelectric strain gauge 480 and the primary trunnion 430a.

It is to be understood that in any example, the piezoelectric strain gauge 480 may be located anywhere on the junction plate 410a. In some examples, the piezoelectric strain gauge 480 may be attached to junction plate 410b.

In other examples, rather than being attached by fixing means such as screws or rivets, for example via the plate and housing described above, the piezoelectric strain gauge 480 may be attached to a part of the actuator 200, for example the junction plate 410a, 410b with an adhesive.

In some examples, since the shock is transmitted throughout the actuator, the piezoelectric strain gauge 480 may be attached to the stop 220.

As described above, upon failure of the primary load path, the secondary load path becomes loaded. In the present example, a shock (or in other word a vibration) is generated when the junction plates 410a, 410b contact respective secondary trunnions 450a, 450b. The shock is detectable by the piezoelectric strain gauge 480.

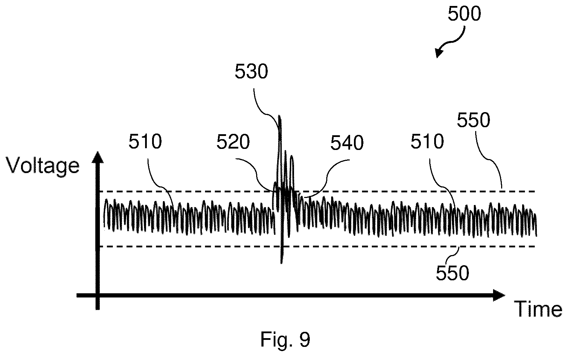

Fig. 9 shows an example signal 500 taken from the piezoelectric strain gauge 480 when the piezoelectric strain gauge 480 is located on the junction plate 410a as shown in Figs. 7a and 7b. In Fig. 9, voltage is shown on the y-axis and is measured against time, shown on the x-axis. The strain gauge 480 may measure background vibrations 510 experienced by the actuator 200. It is to be understood that background vibrations are those vibrations which the actuator may experience under normal use. It is to be understood that in any example, signal or signal data may be referred to as measured vibrations.

Since these background vibrations 510 may always be present during normal use, the background vibrations are measurable with the strain gauge 480. In the present example shown in Fig. 9, the background vibrations 510 have a regular and repetitive signature. It is to be understood that the background vibrations may be more or less regular and repetitive than shown in Fig. 9. For example, the measured voltage may vary more or less than shown dependent on where the strain gauge 480 is located on the junction plate 410a.

In the examples shown in Figs. 7a and 7b, the piezoelectric strain gauge 480 is configured such that, when in one of the positions shown, it is capable of measuring both the loading of the junction plates 410a, 410b by the respective secondary trunnions 450a, 450b and the shock generated therefrom, which has been referred to above as the loading of the secondary load path. It is to be understood that the loading and the shock generated exhibit different signatures in the measured signal.

The loading of the secondary load path, that is, the interaction between the junction plates 410a, 410b and respective secondary trunnions 450a, 450b may be measured when the piezoelectric strain gauge 480 is positioned as shown in Figs. 7a and 7b. Such loading may appear in the signal data as an increase in the mean voltage 520 as compared to the average voltage caused by the background vibrations 510. It is to be understood that the increase in the mean voltage 520 is caused by the deformation of the junction plate 410a, 410b during the loading of the secondary load path. In particular, deformation of the portion of the junction plate 410a, 410b upon which the piezoelectric strain gauge 480 is attached. This deformation may arise due to the impact of the junction 410a, 410b with the secondary trunnions 450a, 450b during loading.

The shock generated by the loading of the secondary load path will be transmitted through the actuator 200 such that it can be measured by the piezoelectric strain gauge 480. The shock has a signature in the signal data of a sharp increase in the voltage amplitude, shown by the increase in the amplitude 530. As the shock is transmitted through the actuator 200, the shock is damped. This damping of the shock is visible in the signal data as an overall decrease in the voltage amplitude 540 after the initial shock increase 530. The actuator 200 will still experience background vibrations after the secondary load path is loaded, as shown in Fig 9.

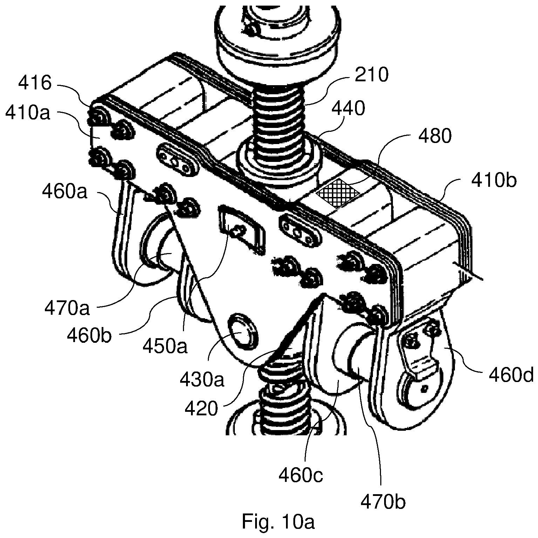

Fig. 10a shows the nut assembly 400 of Fig. 5 from a different angle. In other examples, as shown in Fig. 10a, the piezoelectric strain gauge 480 may be attached to the nut assembly 400 at a different location from the junction plates 410a, 410b. For example, as shown in Fig. 10a, the piezoelectric strain gauge 480 may be attached to one of the arm portions 460a, 460b, 460c, 460d.

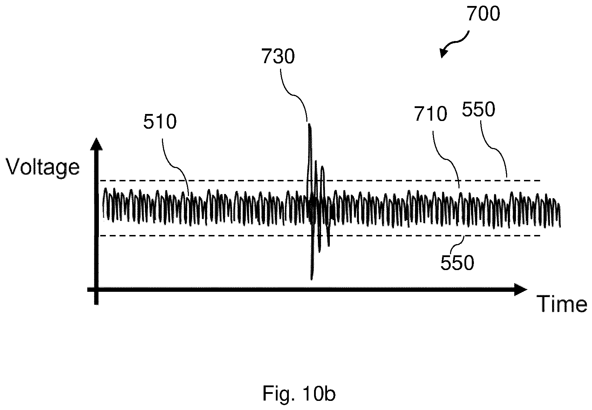

Fig. 10b shows an example signal 700 taken from the piezoelectric strain gauge 480 when the piezoelectric strain gauge 480 is located as shown in Fig. 10a. In Fig. 10b, voltage is shown on the y-axis and is measured against time, shown on the x-axis. The strain gauge may measure background vibrations 710 experienced by the actuator 200. It is to be understood that background vibrations are those vibrations which the actuator may experience under normal use.

Since these background vibrations 710 may always be present during normal use, the background vibrations are measurable with the strain gauge. In the present example shown in Fig. 10b, the background vibrations 710 have a regular and repetitive signature.

In the example shown in Fig. 10b, the piezoelectric strain gauge 480 is configured such that, when in the position shown, it is capable of measuring the shock generated by the loading of the secondary load path but not the loading.

The shock generated by the loading of the secondary load path will be transmitted through the actuator 200 such that it can be measured by the piezoelectric strain gauge 480. The shock has a signature in the signal data of a sharp increase in the voltage amplitude. This is shown by the increase in the amplitude 730. As the shock is transmitted through the actuator 200, the shock is damped. This damping of the shock is visible in the signal data as an overall decrease in the voltage amplitude after the initial shock increase 730. The actuator 200 will still experience background vibrations after the secondary load path is loaded, as shown in Fig 10b.

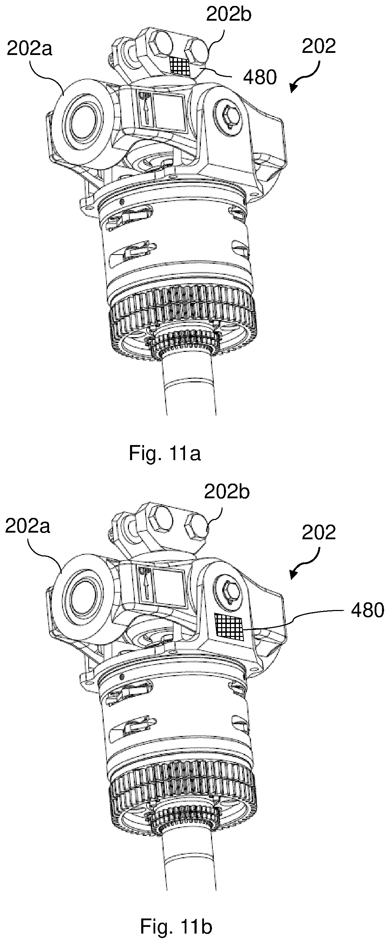

Figs. 11a and 11b show schematic perspective views of the static portion 202 of the actuator shown in Figs 4a and 4b with a piezoelectric strain gauge 480 (which could in some examples be a system 600 such as the system of Fig. 8 including the piezoelectric strain gauge 480) attached thereto at different locations. As described above, the shock generated will be transmitted through the actuator, and therefore will be measurable by a piezoelectric strain gauge 480 attached on the static portion 202. In Fig 11a, the piezoelectric strain gauge 480 is attached to the secondary portion 202b of the static portion 202. In Fig 11b, the piezoelectric strain gauge 480 is attached to the primary portion 202a of the static portion 202. In some examples, the piezoelectric strain gauge 480 may be attached at a different region on the primary portion 202a or secondary portion 202b.

As described above, in any example of the disclosure, the strain gauge 480 or the system 600 for identifying a failure of the primary load path in an actuator may be retrofitted without requiring disassembly of the nut assembly 400.

In any of the following examples, the type of strain gauge is not limited to a piezoelectric strain gauge. The strain gauge may be, but is not limited to, a foil strain gauge, a piezoelectric strain gauge, a piezoresistive strain gauge or a capacitive strain gauge.

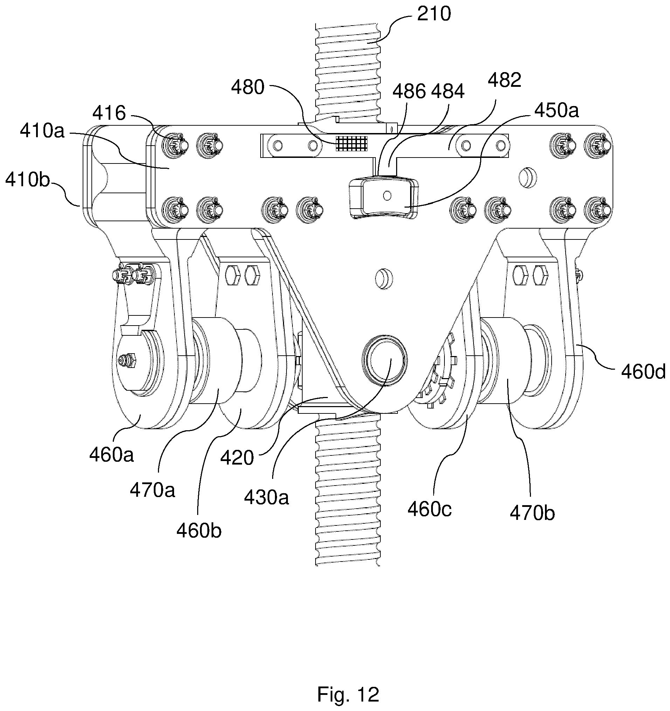

In some examples, the strain gauge 480 may be mounted to a support member. In any of the following examples, the strain gauge 480 may be mounted at any location on the support member 482. In any of the following examples, the strain gauge 480 may be mounted on a surface of the support member 482 which faces away from the actuator when mounted thereto. An example arrangement is shown in Fig. 12. In some examples, the support member may take the form of a plate. In the present example, the strain gauge 480 is attached to a plate 482. The plate 482 may be rigid. The plate 482 may be constructed from a metal such as aluminium or stainless steel. In some examples, the support member may be formed from the same material as the junction plates. In other examples, the support member may be formed from a different material than the junction plates. In the present example, the support member is shown as generally rectangular in shape. However, in other examples, the support member may take any suitable shape. For example, the support member may be triangular, oval, or pill-shaped.

In some examples, the support member may be in the form of a housing 600 such as that described above with the strain gauge 480 contained therein. The housing may be configured to protect the strain gauge.

In some examples, the support member 482 may be retrofitted to the actuator 200 using pre-existing means. That is, existing parts of the actuator may be used to secure the support to the actuator. In the present example, the plate 482 may be retrofitted to the actuator using one or more fasteners 416 which are used to secure the junction plates 410a, 410b and arm portions 460a, 460b, 460c, 460d together. In the present example, the plate 482 may comprise one or more holes. In the present example, the one or more fasteners 416 may be temporarily removed so that the plate 482 may be placed in position so that the one of more holes align with the one or more holes from which the fasteners 416 have been removed. The one or more fasteners 416 may then be replaced, so as to pass through the one or more holes in the plate, and fastened so as to secure the plate 482 to the actuator 200. It is to be understood that due to the inherent thickness of the plate 482, the fasteners 416 may need to be replaced with longer fasteners. In some examples, the plate may be further secured with an adhesive, or with adhesive alone.

It is to be understood that since the plate 482 is in direct contact with the nut assembly 400, the shock can still be measured by the piezoelectric strain gauge 480 since the shock will be transferred to the plate 482. It is believed that the plate 482 has a resonant frequency which makes the background frequencies, as measured by the strain gauge more predictable. That is, the background vibration is known and will have a regular and repetitive signature.

In some examples, the support member may comprise an impact portion 484 configured to contact the secondary trunnion 450a, 450b. In some examples, the impact portion 484 is configured so that, upon failure of the primary load path, a leading edge 486 of the impact portion 484 will impact the secondary trunnion 450a, 450b before the junction plates 410a, 410b impact the respective secondary trunnions 450a, 450b. This may be achieved by configuring the clearance between the leading edge 486 and the respective secondary trunnion 450a, 450b to be less than the clearance between the inner edges defined by the openings 414a, 414b and the secondary junctions 450a, 450b in normal operation. That is, in some examples, the impact portion 484 may overhang the opening 414a, 414b of the junction plate 410a, 410b.

In some examples, the impact portion 484 is configured so that, upon failure of the primary load path, a leading edge 486 of the impact portion 484 will impact the secondary trunnion 450a, 450b simultaneously with the junction plates 410a, 410b impacting the respective secondary trunnions 450a, 450b.

In the present example, the impact portion 484 is shown as a rectangular protrusion with a straight leading edge 486. However, in other examples, the protrusion may take any other suitable shape, for example, curved or triangular. In some examples, the leading edge 486 may be shaped so as to complement the corresponding edge of the secondary trunnion which it impacts. In some examples, the support member may form a housing and comprise a protrusion.

It is to be understood that the support member may be impacted by a different part of the secondary nut than a secondary trunnion. In some examples, the secondary nut may comprise a separate radially outwardly extending member that extends either through an opening 412a, 414b in respective junction plates 410a, 410b or through a separate opening in the junction plate. Upon failure of the primary load path, the support member will be impacted by the radially outwardly extending member.

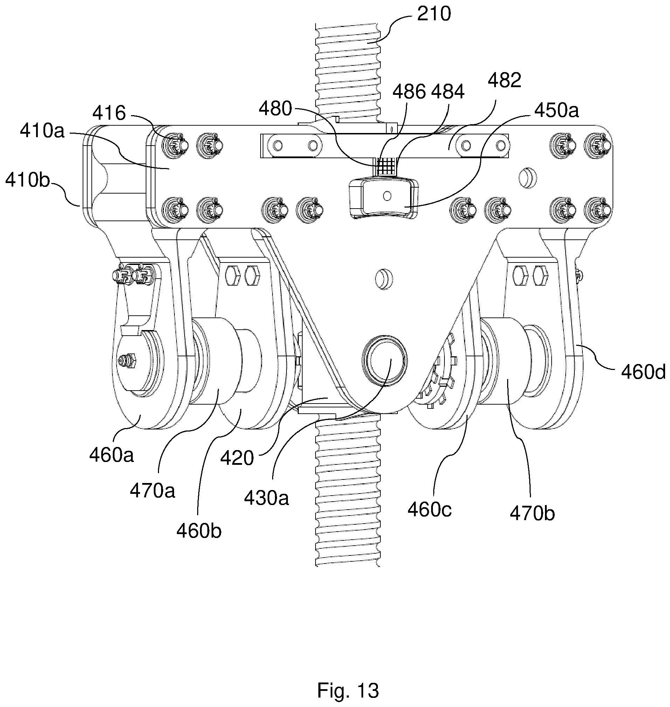

In some examples, for example shown in Fig. 13, the strain gauge 480 may be attached to the impact portion 484 rather than elsewhere on the support member 482. The impact portion 484 may be configured so that the strain gauge 480 may be attached thereto. By providing the strain gauge 480 directly on the impact portion 484, the shock signature in the signal data is clearer than for an arrangement wherein the strain gauge 480 is not attached to the impact portion 484.

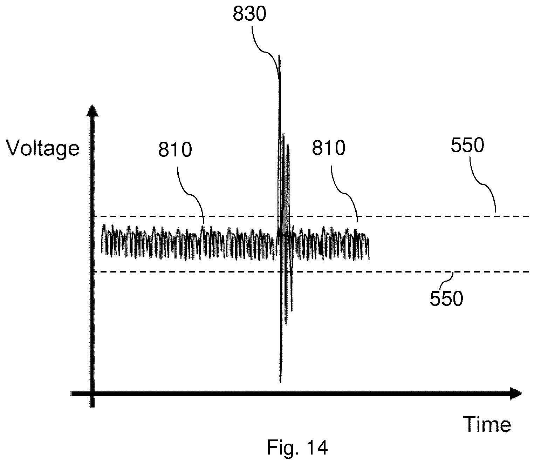

Fig. 14 shows example strain gauge signal data when the primary load path fails or in other words when the secondary load path is loaded for the example shown in Fig. 13. As seen, the peak amplitude 830 is much higher than that recorded in other examples and shown for example in Figs. 9 and 10b. For example, an arrangement with the strain gauge 480 being attached directly to a junction plate. Because the shock signature is clearer in such an arrangement, any suitable strain gauge, including but not limited to a foil strain gauge or a piezoelectric strain gauge may be mounted to the impact portion and used to identify the shock or vibrations caused by the failure of the primary load path and the impact portion impacting a secondary trunnion 450a, 450b.

In the examples where the strain gauge 480 is attached directly to the support member 482, the shock signature may be clearer for one or more reasons. Vibrations in parts of the actuator are caused by impact with the trunnions 450a, 450b. The junction plates 410a, 410b and the support member 482 may be made from the same material. However, each of the junction plates 410a, 410b may be thicker than the support member 482. Since the junction plates 410a, 410b are thicker than the support member 482, vibrations will be more readily damped by the junction plate than by the support member. Consequently, the shock signature obtained in the support member may be clearer than that obtained in either support member and the vibrations measured by the strain gauge 480 attached directly to the support member 482 may be higher than those measured when attached to a junction plate 410a, 410b due to the lower damping effect of the support member. That is, the support member 482 improves the clarity of the measured signal since the vibrations thereof are less damped. It is to be understood that the junction plates 410a, 410b may be thicker than the support member 482 due to the requirement for the junction plates 410a, 410b to be structural in nature.

In the examples where the strain gauge 480 is attached to the impact portion, the shock signature may be clearer for one or more reasons. As explained above, the relative thickness of the support member 482 compared to each junction plate 410a, 410b may improve the clarity of the shock signature. Additionally, or alternatively, it is to be understood that the shock will be damped further from the shock generating region. Therefore, by placing the strain gauge 480 as close as possible to the shock generating region, the shock signature will be most clear since the shock has yet to be significantly damped.

In some examples, the actuator may comprise a processor configured to process signal data obtained by the strain gauge. The processor is configured to identify a shock, as described above. In the following, reference is made to Fig. 9. However, it is to be understood that the following explanation may be applicable to any of the presented signal data. In some examples, the processor may be mounted onto the support member, as described above. In some examples where the support member is in the form of a housing, as described above, the processor may be contained within the housing.

As can be seen from Fig. 9, and discussed above, background vibrations 510 measured by the strain gauge are present in the signal data, and the shock is visually apparent in the signal data. It is desirable to automate shock identification. In some examples, the strain gauge signal data may be compared to a pre-determined threshold value which is indicative of primary load path failure. In some examples, the pre-determined threshold may be determined by analysing and characterising background vibrations shown in the strain gauge signal data during normal use. That is, background vibrations measured, in flight for example when the primary load path is loaded, under normal operation. Data from multiple flights may be combined into a single data set for analysis and characterisation, as set out below.

In Fig. 9, the predetermined threshold is illustrated by two horizontal dashed lines 550 of constant voltage. It is to be understood that the shown thresholds are purely explanatory, and that the thresholds may be more or less restrictive than shown. As shown in Fig. 9, the strain gauge signal data may exceed the predetermined threshold more than once. That is, due to the oscillatory nature of the data, the peak amplitudes in the strain gauge signal data due to the shock will exceed the predetermined threshold.

In some examples, the pre-determined threshold may be determined by calculating the mean and standard deviation of the voltage amplitude for the background vibrations, and setting the pre-determined threshold value equal to n-standard deviations, wherein n is any real number. That is, measured strain gauge amplitude data exceeding n-standard deviations from the mean background amplitude would indicate failure of the primary load path, and loading of the secondary load path. It is to be understood that since that signal is oscillatory in nature, the predetermined threshold may comprise two thresholds: the mean background amplitude plus n-standard deviations and the mean background amplitude minus n-standard deviations. Therefore, exceeding may be taken to mean being greater than the mean background amplitude plus n-standard deviations or being less than the mean background amplitude minus n-standard deviations.

Additionally, or alternatively, the pre-determined threshold may be determined by calculating the mean and standard deviation of the frequency of the background vibrations, and setting the pre-determined threshold value equal to n-standard deviations, wherein n is any real number. That is, measured strain gauge frequency data exceeding n-standard deviations from the mean background frequency would indicate failure of the primary load path, and loading of the secondary load path. In some examples, both the amplitude and frequency pre-determined thresholds may be used.

In some examples, the pre-determined threshold may be determined in a different way. For example, the mean peak value of the background peak amplitudes may be determined, and the pre-determined threshold set as n-mean peak value. That is, measured strain gauge amplitude data exceeding n- mean peak value would indicate failure of the primary load path, and loading of the secondary load path.

In other examples, the background vibrations may be determined using computational modelling techniques, from which the pre-determined threshold may be determined as described above.

It is to be understood that the pre-determined threshold may vary depending on the type of actuator in use, and therefore may need to be determined for each individual actuator. Such variance may be due to each actuator having its own resonant frequency.

In the present example, the strain gauge signal data is communicated to the processor in real time. In the present example, the processor is configured to compare the strain gauge signal data in real time with the pre-determined threshold. The pre-determined threshold may be determined using any of the methods above.

Where the pre-determined threshold is determined using amplitude data, the processor will compare strain gauge signal amplitude data to the pre-determined threshold value. In the present example, the processor will determine whether the strain gauge signal amplitude data exceeds the predetermined threshold.

As the shock is damped throughout the actuator, the measured amplitudes will decrease and no longer exceed the predetermined threshold.

In some examples, the processor may be configured to provide a notification, for example to a user, that the primary load path has failed. The notification may be notified on the basis that the strain gauge signal data exceeded the predetermined threshold, as described above for any example. In some examples, the actuator may comprise transmission means configured to transmit the notification to a user. While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. A system for identifying a failure of the primary load path in an actuator,
the actuator comprising:
a screw shaft; and
a nut assembly moveable along the screw shaft,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path,
the system comprising:
a strain gauge configured to be mounted to the actuator and to measure vibrations of the actuator; and
a processor configured to identify a failure of the primary load path from the measured vibrations,
wherein the strain gauge is a piezoelectric strain gauge.

2. A system as claimed in claim 1, wherein the strain gauge is mounted on a support member configured to be mounted to the actuator.

3. An actuator comprising:
a screw shaft;
a nut assembly moveable along the screw shaft,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path; and:
a system as claimed in claim 1 or 2, wherein the strain gauge or the support member is mounted to the actuator.

4. The actuator of claim 3, wherein the strain gauge or the support member is mounted on the nut assembly.

5. A system for identifying a failure of the primary load path in an actuator,
the actuator comprising:
a screw shaft; and
a nut assembly moveable along the screw shaft,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path,
the system comprising:
a support member configured to be mounted to the nut assembly, wherein, upon failure of the primary load path, the support member is configured to be impacted by the secondary nut and to vibrate due to the impact;
a strain gauge mounted to the support member and configured to measure vibrations of the support member; and
a processor configured to identify a failure of the primary load path from the measured vibrations.

6. A system as claimed in claim 5, wherein the support member comprises an impact portion configured such that, upon failure of the primary load path, the impact portion is impacted by a component of the secondary nut before or simultaneously with the loading of the secondary load path.

7. A system as claimed in claim 6, wherein the strain gauge is mounted on the impact portion.

8. An actuator comprising:
a screw shaft;
a nut assembly moveable along the screw shaft,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path; and
a system as claimed any of claims 5 to 7, wherein the support member is mounted to the nut assembly.

9. The actuator of claim 4 or 8, wherein the nut assembly comprises a junction plate configured to form a portion of the primary load path in normal operation, and further configured to form a portion of the secondary load path upon failure of the primary load path, and wherein the strain gauge or the support member is mounted on the junction plate.

10. The actuator of claim 8 or 9, wherein the secondary nut comprises an outwardly extending member, and wherein the support member is configured to be impacted by the outwardly extending member.

11. A system or an actuator as claimed in any preceding claim, wherein the processor is configured to compare the measured vibrations to a predetermined threshold value to identify the failure of the primary load path; and /or
wherein the system comprises a housing configured to protect the strain gauge.

12. An aircraft comprising a system or an actuator as claimed in any preceding claim.

13. A method for identifying a failure of the primary load path in an actuator,
the actuator comprising:
a screw shaft; and
a nut assembly moveable along the screw shaft,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path,
the method comprising:
measuring vibrations of the actuator by a piezoelectric strain gauge mounted to the actuator; and
processing the measured vibrations to identify a failure of the primary load path.

14. A method as claimed in claim 13, the processing the measured vibrations comprising:
comparing the measured vibrations to a pre-determined threshold value; and
identifying a failure of the primary load path when the measured vibrations exceed the pre-determined threshold value.

15. A method for modifying an actuator, the actuator comprising:
a screw shaft; and
a nut assembly moveable along the screw shaft,
wherein the nut assembly comprises a primary nut for transmitting load through the actuator along a primary load path, and a secondary nut for transmitting load through the actuator along a secondary load path,
wherein the nut assembly is configured such that, in normal operation, the secondary nut is not engaged with the screw shaft and load is transmitted through the actuator along the primary load path, and such that, upon failure of the primary load path, the secondary nut is configured to engage the screw shaft and transmit load through the actuator along the secondary load path,
the method comprising installing a system as claimed in any of claims 1, 2 or 5 to 7 on the actuator.
